Europäisches Patentamt

**European Patent Office**

Office européen des brevets

(19)

(11) Numéro de publication: **0 052 567**
**B1**

(12) **FASCICULE DE BREVET EUROPEEN**

(45) Date de publication du fascicule du brevet: **27.06.84**

(51) Int. Cl.³: **B 25 B 27/00**, B 23 P 19/08

(21) Numéro de dépôt: **81401801.6**

(22) Date de dépôt: **17.11.81**

(54) Procédé et dispositif d'extraction des garnitures d'un presse-étoupe.

(30) Priorité: **19.11.80 FR 8024503**

(43) Date de publication de la demande:
**26.05.82 Bulletin 82/21**

(45) Mention de la délivrance du brevet:
**27.06.84 Bulletin 84/26**

(84) Etats contractants désignés:
**BE CH DE GB IT LI**

(56) Documents cités:
**US - A - 3 694 894**
**US - A - 3 861 248**
**US - A - 3 876 213**

(73) Titulaire: **SEREG S.A., 12, place des Etats-Unis,
F-92120 Montrouge (FR)**
Titulaire: **BERTIN & CIE, Boîte Postale No. 3,
F-78370 Plaisir (FR)**

(72) Inventeur: **Marsac, Jean-Yves, 104, Cours Albert
Thomas, F-69008 Lyon (FR)**
Inventeur: **Balzano, Lucien, 27, Square Charles
Baudelaire, F-78760 Jouars Pontchartrain (FR)**
Inventeur: **Leprêtre, Marc, 81, rue Paul Déroulède,
F-92270 Bois-Colombes (FR)**

(74) Mandataire: **Dronne, Guy, Giers Schlumberger 12 Place
des Etats-Unis, F-92124 Montrouge (FR)**

BUNDESDRUCKEREI BERLIN

## Description

L'invention concerne un procédé et un dispositif d'extraction des garnitures d'un presse-étoupe ou presse-garnitures.

Un presse-étoupe, utilisé couramment pour obtenir une étanchéité à un fluide au droit de l'axe mobile d'un appareil tel qu'une pompe, une vanne ou un compresseur, comprend une pluralité de garnitures annulaires entourant à contact l'axe mobile, placées dans une boîte à garnitures solidaire de l'appareil et maintenues sous contrainte dans celle-ci par un fouloir logé dans une bridge qui prend appui, par l'intermédiaire de goujons filetés et boulonnés, sur un plateau fixé sur la boîte à garnitures.

Au bout d'un temps de fonctionnement de l'appareil qui peut être relativement bref lorsque l'on travaille à des pressions de fluide ou à des températures élevées, il est nécessaire pour maintenir une étanchéité satisfaisante, de remplacer les garnitures. Pour ce faire, après avoir désolidarisé le plateau et la bridge, on soulève celle-ci le long de l'axe de manière à pouvoir extraire le fouloir de la boîte et avoir accès aux garnitures.

Jusqu'à présent, celles-ci étaient extraites à la main successivement à l'aide d'outils tels que des crochets ou »tire-bouchons« tels que l'extracteur de garniture décrit dans le brevet des Etats-Unis d'Amérique No 3 861 248, que l'on enfonçait dans la garniture découverte puis que l'on soulevait de manière à tirer celle-ci hors de la boîte.

Cependant, d'une part les garnitures maintenues sous contrainte dans la boîte par le fouloir lors du fonctionnement de l'appareil présentent une dureté relativement élevée et sont presque serties dans leur logement, ce qui rend difficile la prise du crochet dans une garniture et nécessite quelquefois l'utilisation de forces mécaniques importantes capables d'endommager la boîte ou l'axe de l'appareil, et d'autre part, dans certains cas, le fouloir ne peut pas être suffisamment écarté de la boîte sans démontage de tout l'appareil, ce qui rend l'accès aux garnitures mal commode et même quelquefois presque impossible.

Dans les cas les plus défavorables l'extraction peut nécessiter plusieurs heures, ce qui est toujours un inconvénient important et devient inacceptable lorsque l'opérateur doit travailler en atmosphère polluée, comme c'est le cas par exemple dans les centrales nucléaires.

Le but de l'invention est de proposer un procédé et un dispositif d'extraction des garnitures d'un presse-étoupe qui, contrairement au procédé et à l'outil connu, permettent une extraction aisée et rapide même dans le cas où l'espace libre entre le fouloir et la boîte à garnitures est extrêmement réduit, et avec lesquels tout danger d'endommagement de l'axe mobile ou de la boîte est éliminé.

Le procédé selon l'invention est caractérisé en ce qu'après ouverture du presse-étoupe on dirige un jet de liquide vers la surface découverte des garnitures, l'énergie cinétique du jet étant suffisamment faible pour ne pas endommager les pièces constitutives de l'appareil sur lequel on opère, et étant suffisamment élevée pour former un trou traversant au moins dans une quelconque des garnitures.

De cette façon, les forces de contrainte présentes dans cette garniture et dues soit au traitement subi avant sa mise en place, soit à la pression exercée ensuite par le fouloir, sont supprimées ou considérablement diminuées, si bien qu'elle peut alors coulisser facilement le long de l'axe pour être extraite.

Le liquide du jet traverse alors, la garniture découverte, prend appui sur la garniture immédiatement suivante ou sur le fond de la boîte et engendre une pression sur la garniture découverte, qui à elle seule, soulève la garniture découverte le long de l'axe jusqu'à ce qu'elle sorte de la boîte. Il suffit alors, pour terminer l'extraction, de tordre la garniture grâce à la fente radiale qu'elle présente pour la dégager de l'axe de l'appareil.

Selon l'invention, la pression utilisée pour le jet est avantageusement de l'ordre de 800 bars, ce qui est suffisant pour obtenir, au plus en quelques minutes, une libération des garnitures les plus couramment utilisées, sans pour autant présenter de danger pour les autres pièces de l'appareil.

Selon l'invention également, on utilise de manière préférée un jet cylindrique cohérent dont le diamètre est de l'ordre de 0,5 mm.

De cette manière, la buse de formation du jet peut avoir des dimensions suffisamment réduites pour être utilisées même dans le cas de garnitures s'accès difficile et de diamètre égal ou même inférieur à 10 mm, tout en restant efficace pour les garnitures plus larges.

De plus, le choix de cet jet permet d'utiliser des moyens d'alimentation en liquide de la buse ayant un volume et un poids réduits, par exemple un compresseur utilisant comme source d'énergie de l'air sous pression, ce qui permet de les monter sur un chariot mobile. L'approche de l'appareil par la buse est alors grandement facilitée.

De manière à obtenir aisément le positionnement de la buse au-dessus des garnitures, l'invention prévoit de faire appel à des moyens de fixation de la buse sur l'appareil lui-même, notamment des moyens de fixation orientables d'un bras support de la buse sur les colonnettes ou arcades d'une vanne qui servent de support au moyen de commande de l'axe d'entraînement du clapet.

Pour éviter toute projection de liquide du jet ou de fragments de garniture dans l'espace entourant l'appareil sur lequel on opère, l'invention fait appel à un capôt de protection entourant la partie supérieure de la boîte à garnitures et l'axe mobile, et formé par exemple de deux demi-coquilles assemblables munies de moyens d'introduction de la buse et de moyens d'extraction du liquide après son utilisation.

Selon l'invention, ce liquide peut être de nature quelconque mais est de préférence de l'eau déminéralisée, qui est aisément disponible, qui présente une masse volumique suffisamment élevée, et qui permet d'éviter tout dépôt calcaire susceptible d'obstruer l'orifice de sortie de la buse.

L'invention sera mieux comprise à la lecture de la description faite ci-après à titre d'exemple seulement, en se référant au dessin annexé, dans lequel:

— la fig. 1 est une vue en coupe de la partie inférieure d'une vanne au début de l'opération d'extraction des garnitures,
— la fig. 2 est une vue similaire à la fig. 1, mais en perspective,
— la fig. 3 est une vue schématique d'un moyen d'alimentation en liquide de la buse, et
— la fig. 4 est une vue en coupe d'une buse.

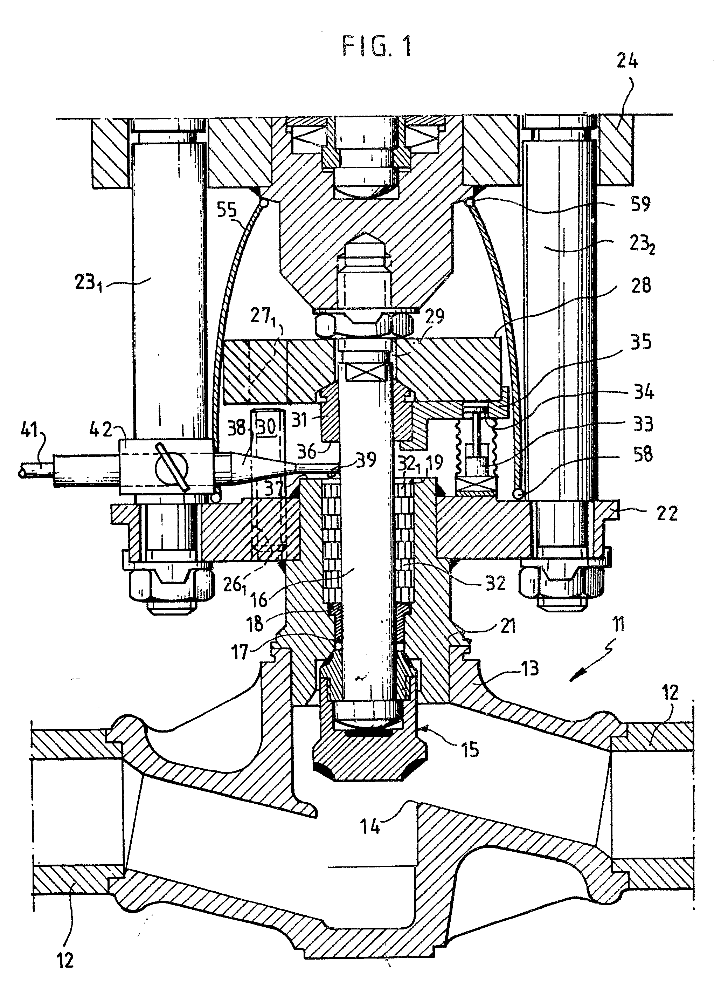

On a illustré à la fig. 1 une vanne 11 insérée dans une canalisation 12 et dont le corps 13 comporte un siège de clapet annulaire 14 sur lequel est apte à prendre appui un clapet 15 porté par un axe ou tige d'actionnement 16 coulissant dans une bague 17 dont la surface supérieure 18 forme le fond d'un logement cylindrique 19 axé sur la tige et ménagé dans une boîte à garnitures 21 soudée à la partie supérieure du corps 13.

Un plateau 22, soudé sur la partie supérieure de la boîte 21, porte quatre colonnettes 23, symétriques par rapport à la tige 16 et situées deux par deux respectivement dans le plan de la figure et dans le plan axial qui lui est perpendiculaire, et qui portent les moyens d'actionnement (non représentés) de la tige 16, les colonnettes $23_1$ et $23_2$, seules visibles sur la fig. 1, supportant à glissement une barrette 24 de guidage et d'entraînement de la tige 16 qui peut être utilisée également comme moyen d'indication de la position du clapet 15.

Le plateau 22 comporte deux trous taraudés 26, symétriques par rapport à la tige 16 dans un plan bissecteur des plans des colonnettes, et aptes à recevoir l'extrémité inférieure de goujons filetés 30 dont les autres extrémités sont angagés dans des trous 27 pratiqués dans une bride de presse-étoupe 28 montée par son ouverture centrale 29 autour de la tige 16 (seuls les trous $26_1$, $27_1$, et le goujon $30_1$ étant visibles sur la fig. 1).

La bride 28 loge à sa partie inférieure un fouloir 31 en forme de manchon, entourant la tige 16, et dont le diamètre externe est légèrement inférieur au diamètre interne du logement 19, de manière à pouvoir pénétrer dans celui-ci pour exercer une pression sur les huit garnitures 32 qui y sont logées lorsque la bride 28 est rapprochée du plateau 22 sous l'action d'écrous vissés sur la partie filetée supérieure des goujons.

Pour permettre l'extraction des garnitures 32 en évitant un démontage complet des moyens d'actionnement de la tige 16, le clapet 15, ainsi qu'il est représenté, est mis dans sa position haute, puis lesdits écrous sont desserrés, la bride 28 et le fouloir 31 sont soulevés le long de la tige 16 jusqu'à buter sur la partie inférieure de la barrette 24, position dans laquelle ils sont maintenus par un vérin 33, glissé entre la bride 28 et le plateau 22, et dont la tête 34 porte de manière réglable en hauteur une pièce support profilée 35 épousant la forme de la surface inférieure de la bride 28 et du fouloir 31.

Entre la surface inférieure annulaire 36 du fouloir et la surface supérieure également annulaire 37 de la boîte à garnitures, est amenée l'extrémité avant d'un bras 38 portant une buse 39 de projection d'eau, par exemple à profil évolutif, la buse étant en communication par un passage du bras 38 avec un conduit souple 41 relié à des moyens d'alimentation 90 en eau sous pression.

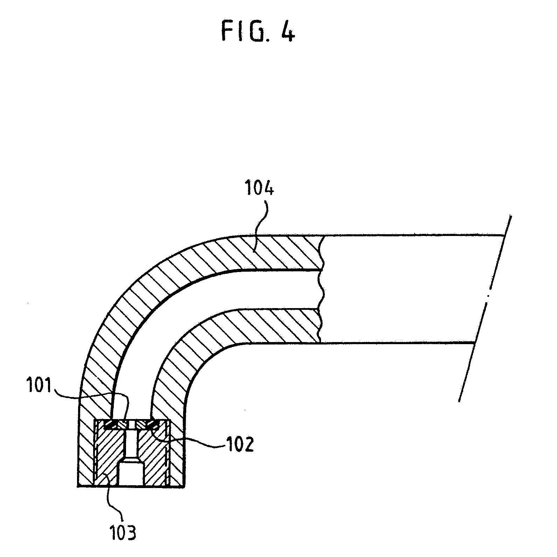

La buse peut être celle décrite dans un des brevets US 3 088 854, 3 212 378 et 2 985 050, ou comporter (fig. 4) un saphir 101 comprenant l'orifice par lequel le jet est éjecté, lui-même inclus dans un matériau plastique 102, constitué par exemple en »DELRIN«; le matériqu est lui-même serti dans un élément support métallique 103 fileté et vissé sur le support de buse 104.

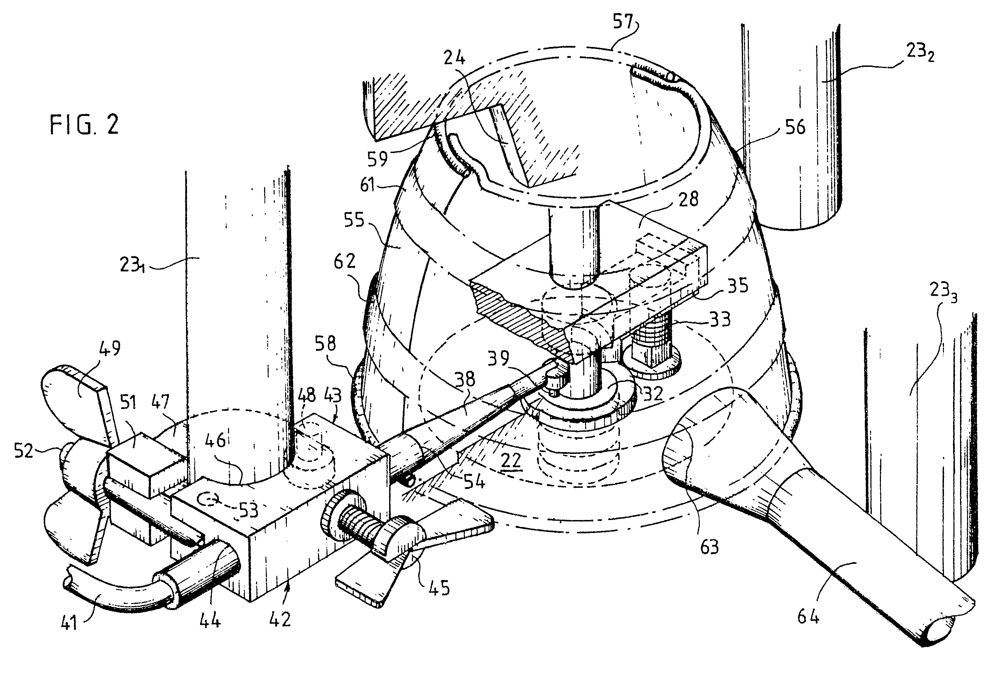

Pour positionner la buse 39 par rapport aux garnitures 32, il est prévu un dispositif de fixation 42 (fig. 2) à la colonnette $23_1$, comprenant un corps 43 dans lequel est ménagé un trou traversant 44 dans lequel le bras 38 peut être reçu et bloqué par une vis 45, et une surface semi-cylindrique 46 apte à épouser la forme de la colonnette $23_1$ sur laquelle le bras 38 est positionné, un crochet 47 monté à pivotement en 48 sur le corps 43 étant apte à venir s'appuyer sur, l'autre côté de la colonnette $23_1$ sous l'action d'un papillon 49 prenant appui sur l'extrémité en fourche 51 du crochet 47, et se déplaçant sur une tige filetée 52 montée à rotation en 53 dans le corps 43.

L'extrémité avant du bras 38 pénètre par un trou 54 dans un capot de protection 55 ayant la forme d'un cône tronqué comportant deux demi-coquilles 56, 57 en matériau relativement élastique, comme du plastique, transparent de manière que le déroulement de l'opération d'extraction des garnitures puisse être suivi de l'extérieur, et pouvant être fixée l'une à l'autre par exemple par l'intermédiaire de bandes dites »Velcro«, ou par emboîtage.

La tranche inférieure du capot 55 prend appui, par l'intermédiaire d'un bourrelet d'étanchéité 58 sur la surface supérieure du plateau 22, la tranche supérieure portant, par l'intermédiaire d'un bourrelet 59, sur la barrette 24. Le capot 55 comporte des anneaux de raidissement 61, 62 et une seconde ouverture inférieure 63 recevant un tuyau d'extraction 64 relié à un système de filtrage, à une pompe, et à un moyen d'évacuation (non représentés), aptes à recueillir l'eau projetée par la buse 39 et les fragments de garniture extraits de la boîte 21.

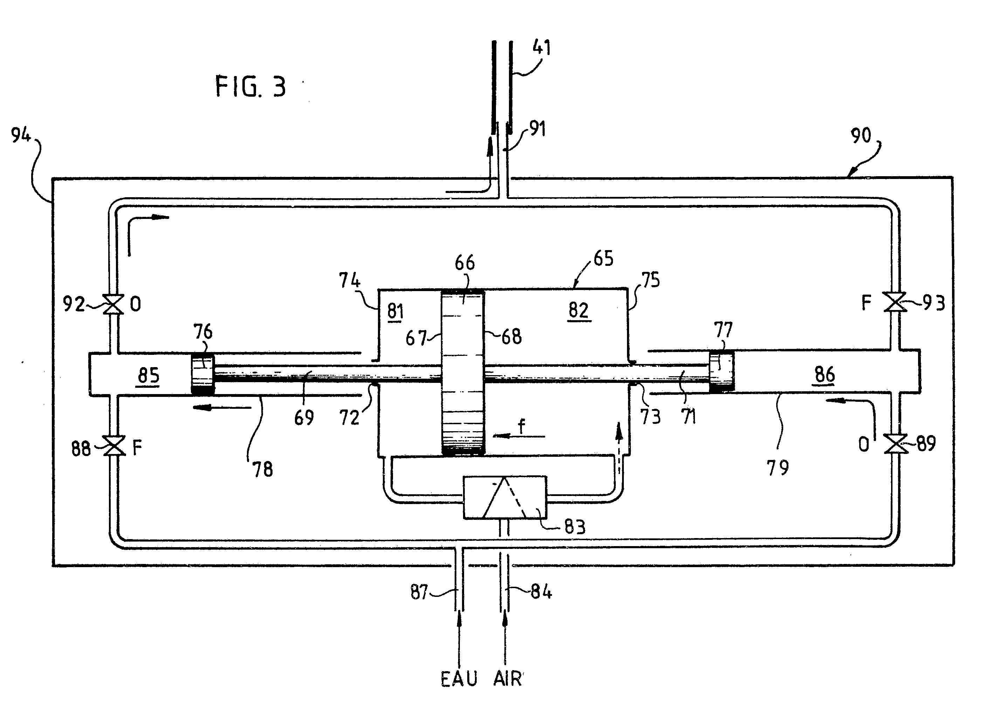

Les moyens d'alimentation 90 en eau sous pression de la buse 39 comprennent (fig. 3) un cylindre principal 65 dans lequel est apte à coulisser un piston 66 dont les deux faces 67, 68 portent des bras 69, 71 dépassant latéralement par des ouvertures 72, 73 ménagées dans les faces latérales 74, 75 limitant le cylindre, et portant à leurs extrémités des pistons 76, 77 de surface inférieure à la surface du piston 66 et coulissant dans des cylindres 78, 79.

Les chambres 81, 82 limitées par le piston 66 et les faces 74, 75 respectivement sont reliées par un circuit pneumatique inverseur 83 à une amenée 84 d'air sous pression, et les chambres 85, 86 des cylindres 78, 79 sont reliées d'une part à une alimentation 87 en eau sous basse pression, par l'intermédiaire de clapets d'aspiration 88, 89, et d'autre part à une canalisation de sortie de liquide sous haute pression 91 par l'intermédiaire de clapets de refoulement 92, 93, la canalisation 91 étant reliée par le tuyau souple 41 à la buse 39.

L'ensemble du compresseur est monté sur un chariot (non représenté) lui-même relié par des canalisations souples à des moyens de fourniture d'air et d'eau.

Le dispositif qui vient d'être décrit est mis en oeuvre de la manière suivante:

Après avoir amené la tige 16, la bride 28 et le fouloir 31 dans la position à laquelle ils sont représentés à la fig. 1, et avoir immobilisé ces derniers par le vérin 33 et le support 35, la buse 39 est placée au-dessus des garnitures 32, de manière que son jet soit dirigé sensiblement perpendiculairement à la surface supérieure découverte de la première garniture $32_1$ et atteigne cette dernière au moins approximativement en un point médian de sa largeur.

L'épaisseur de l'extrémité du bras 38 et de la buse 39, qui peut être de l'ordre de 5 mm, est suffisamment faible pour que la buse puisse être introduite dans l'espace compris entre la surface 36 du fouloir et la garniture $32_1$.

Le bras 38 est alors immobilisé en position par serrage des papillons 45 et 49, le capot 55 est mis en place, et maintenu en position par l'effet de ressort résultant du fait que la hauteur du capot à l'état libre est supérieure à la distance séparant le plateau 22 de la barrette 24.

De l'air sous une pression d'une dizaine de bars est alors introduit par l'inverseur 83 dans une des chambres 81, 82, par exemple le chambre 82 du cylindre 65, ce qui a pour effet de repousser le piston 66 de la droite vers la gauche (flèche f sur la fig. 3) si bien que l'eau amenée sous une pression de 3 à 4 bars par l'alimentation 87 dans la chambre 85 du cylindre 78 est repoussée par le piston 76 dans la canalisation 91, où elle est portée à 800 bars.

Lorsque le piston 66 arrive en fin de course, la position de l'inverseur 83 est modifiée et la chambre 81 reçoit alors l'air sous pression tandis que la chambre 82 est mise à l'atmosphère. Le piston 66 se déplace alors en sens contraire de la flèche f, ce qui a pour effet d'une part de mettre sous pression la chambre 86 qui alimente à son tour la canalisation 91, le clapet 89 empêchant tout refoulement vers l'alimentation en eau 87, et d'autre part de remplir d'eau la chambre 85 par l'intermédiaire du clapet 88, le clapet 92 empêchant alors tout refoulement d'eau sous haute pression dans la chambre 85 à partir de la canalisation 91.

L'eau sous haute pression fournie à la buse 39 par l'intermédiaire du tuyau souple 41 est dirigée par celle-ci, sous la forme d'un jet cylindrique cohérent d'un diamètre de 0,5 mm, égal au diamètre de l'orifice formé dans le saphir 101, vers la surface supérieure de la garniture $32_1$, avec un débit qui est de l'ordre de 5 l/mn.

Au bout de quelques secondes de fonctionnement, le jet sous pression a formé dans la garniture un trou traversant dont le diamètre atteint de 1 à 2 mm, et ceci même lorsque la garniture, généralement en amiante graphitée ou en graphite expansé, atteint une épaisseur de 35 à 40 mm.

L'eau sous pression alors introduite entre la surface inférieure de la garniture $32_1$ et la surface supérieure de la garniture $32_2$ suivante a pour effet de pousser la première garniture en dehors du logement 19.

On a constaté, de manière surprenante, qu'il n'était pas nécessaire de déplacer la buse 39 le long des garnitures 32 pour obtenir l'extraction. Au contraire, la formation d'un seul trou dans les garnitures permet la suppression des contraintes mécaniques dues notamment à leur sertissage par le fouloir 31, contraintes qui continuent à s'exercer même lorsque le fouloir 31 est dans la position illustrée à la fig. 1.

Lorsque l'espace disponible entre la boîte à garnitures et le fouloir est inférieur à une dizaine de millimètres, il est alors nécessaire d'arrêter le jet, d'ouvrir le capot 55 et de dégager de la tige 16, à la main ou à l'aide d'un outil adéquat, la garniture qui a été extraite, avant de réadmettre de l'eau sous pression dans la buse.

L'opération d'extraction se poursuit alors, par étapes successives, jusqu'à extraction de la dernière garniture.

Cependant, lorsque l'espace compris entre la boîte à garniture et le fouloir est plus important, plusieurs garnitures, ou même la totalité des garnitures peuvent être extraites au cours d'une même étape de fonctionnement de la buse.

L'eau injectée par la buse 39, après avoir été utilisée pour l'extraction des garnitures 32, est ensuite recueillie par la canalisation 64.

Il est également possible, de manière à accélérer l'extraction, et notamment lorsque la vanne a un diamètre nominal supérieur à une centaine de millimètres, d'utiliser simultanément deux buses ou plus, espacées le long de la surface supérieure annulaire des garnitures.

Si le liquide utilisé pour le jet est normalement de l'eau déminéralisée, de manière à éviter tout dépôt de calcaire sur le col de la buse, ce qui pourrait gêner son fonctionnement, il est également possible d'employer tout autre liquide, par exemple un solvant, si l'on désire, simultanément à l'extraction nettoyer le logement 19.

De la même manière, les indications numériques ci-dessus ne sont données qu'à titre d'exemple, et peuvent être modifiées pour s'adapter au presse-étoupe sur lequel on opère, et le procédé selon l'invention n'est évidemment pas limité à l'exemple qui vient d'être décrit, et peut s'appliquer à tout presse-étoupe utilisé dans tout type d'appareil, par exemple une pompe ou un compresseur.

Aussi, la pression du jet peut être abaissée ou au contraire élevée de plusieurs centaines de bars et le diamètre de la buse peut être réduit ou augmenté.

**Revendications**

1. Procédé d'extraction des garnitures d'un presse-étoupe, caractérisé en ce qu'après ouverture du presse-étoupe on dirige un jet de liquide vers la surface découverte des garnitures, l'énergie cinétique du jet étant suffisamment faible pour ne pas endommager les pièces constitutives de l'appareil sur lequel on opère, et étant suffisamment élevée pour former un trou traversant au moins dans une quelconque des garnitures.

2. Procédé selon la revendication 1, caractérisé en ce que le jet est mis en oeuvre et entretenu dans une position fixe, son énergie étant suffisante pour que, après avoir formé un trou traversant au moins dans la garniture découverte, il engendre une pression entre celle-ci et une garniture suivante ou le fond de la boîte logeant les garnitures, qui est suffisante pour éjecter la garniture découverte.

3. Procédé selon l'une quelconque des revendications 1 et 2, caractérisé en ce que le jet est mis en oeuvre et entretenu suivant un point approximativement médian de la largeur des garnitures.

4. Procédé selon l'une quelconque des revendications 1 à 3, caractérisé en ce que le liquide utilisé est de l'eau déminéralisée.

5. Procédé selon l'une quelconque des revendications précédentes, caractérisé en ce que la pression de liquide formant lejet est de l'ordre de 800 bars.

6. Procédé selon l'une quelconque des revendications précédentes, caractérisé en ce que le jet est cylindrique, cohérent et d'un diamètre de l'ordre de 0,5 mm.

7. Dispositif pour extraire des garnitures d'un presse-étoupe, caractérisé en ce qu'il comprend des moyens d'alimentation (90) en liquide sous pression et une buse (39) recevant ledit liquide sous pression pour former un jet de liquide dirigé vers la surface découverte des garnitures (32), l'énergie cinétique dudit jet étant suffisamment faible pour ne pas endommager les pièces constitutives de l'appareil sur lequel on opère et étant suffisamment élevée pour former un trou traversant au moins dans une quelconque des garnitures (32).

8. Dispositif selon la revendication 7, caractérisé en ce que le moyen d'alimentation (90) est apte à fournir du liquide sous pression de l'ordre de 800 bars.

9. Dispositif selon l'une quelconque des revendications 7 ou 8, caractérisé en ce que la buse (39) est telle que le jet de liquide est homogène et a un diamètre de l'ordre de 0,5 mm.

10. Dispositif selon l'une quelconque des revendications 7 à 9, caractérisé en ce que le moyen d'alimentation (90) comprend un compresseur (65) dont la source d'énergie (84) est de l'air sous pression.

11. Dispositif selon l'une quelconque des revendications 7 à 10, caractérisé en ce que le moyen d'alimentation (41) est monté sur un chariot mobile relié à la buse par un tuyau souple.

12. Dispositif selon l'une quelconque des revendications 7 à 11, caractérisé en ce qu'il comprend un bras support (38) de la buse et des moyens de fixation (42) du bras support sur une partie (23) de l'appareil sur lequel on opère.

13. Dispositif selon l'une quelconque des revendications 7 à 12, caractérisé en ce qu'il comprend un capot (55) de protection et de récupération du liquide.

14. Dispositif selon l'une quelconque des revendications 7 à 13, caractérisé en ce qu'il comprend un vérin (33) destiné à supporter le corps de presse-étoupe (28) au cours de l'opération d'extraction.

**Patentansprüche**

1. Verfahren zum Herausziehen der Einsätze einer Stopfbüchse, dadurch gekennzeichnet, daß nach dem Öffnen der Stopfbüchse ein Flüssigkeitsstrahl gegen die freigelegte Oberfläche der Einsätze gerichtet wird, wobei die kinetische Energie des Strahls ausreichend gering ist, damit die Teile, aus denen das in Bearbeitung befindliche Gerät besteht, nicht beschädigt werden, und ausreichend groß ist, damit ein durchquerendes Loch in wenigstens einem beliebigen der Einsätze gebildet wird.

2. Verfahren nach Anspruch 1, dadurch gekennzeichnet, daß der Strahl in einer festen Lage angewendet und aufrechterhalten wird, wobei seine Energie ausreichend groß ist, damit er nach Bildung eines durchquerenden Loches in wenigstens einem der freigelegten Einsätze einen Druck zwischen diesem und einem darauffolgenden Einsatz oder dem Boden der die Einsätze aufnehmenden Büchse erzeugt, der ausreicht, um den freigelegten Einsatz auszustoßen.

3. Verfahren nach Anspruch 1 oder 2, dadurch gekennzeichnet, daß der Strahl an einem Punkt ungefähr in der Mitte der Breite der Einsätze zur Anwendung gebracht und aufrechterhalten wird.

4. Verfahren nach einem der Ansprüche 1 bis 3, dadurch gekennzeichnet, daß die verwendete Flüssigkeit entmineralisiertes Wasser ist.

5. Verfahren nach einem der vorstehenden Ansprüche, dadurch gekennzeichnet, daß der Druck der den Strahl bildenden Flüssigkeit in der Größenordnung von 800 Bar liegt.

6. Verfahren nach einem der vorstehenden Ansprüche, dadurch gekennzeichnet, daß der Strahl zylindrisch und kohärent ist sowie einen Durchmesser in der Größenordnung von 0,5 mm aufweist.

7. Vorrichtung zum Herausziehen der Einsätze einer Stopfbüchse, dadurch gekennzeichnet, daß sie Mittel (90) zur Flüssigkeitszuführung unter Druck und eine Düse (39) enthält, welche die unter Druck stehende Flüssigkeit empfängt, um einen Flüssigkeitsstrahl zu bilden, der gegen die freigelegte Oberfläche der Einsätze (32) gerichtet ist, wobei die kinetische Energie des Strahls ausreichend gering ist, damit die Teile, aus denen das in Bearbeitung befindliche Gerät besteht, nicht beschädigt werden, und ausreichend groß ist, um ein durchquerendes Loch in wenigstens einem beliebigen der Einsätze (32) zu bilden.

8. Vorrichtung nach Anspruch 7, dadurch gekennzeichnet, daß die Zuführmittel (90) geeignet sind, um Flüssigkeit unter einem Druck in der Größenordnung von 800 Bar zu liefern.

9. Vorrichtung nach Anspruch 7 oder 8, dadurch gekennzeichnet, daß die Düse (39) derart ausgebildet ist, daß der Flüssigkeitsstrahl homogen ist und einen Durchmesser in der Größenordnung von 0,5 mm aufweist.

10. Vorrichtung nach einem der Ansprüche 7 bis 9, dadurch gekennzeichnet, daß die Zuführeinrichtung (90) einen Kompressor (65) umfaßt, dessen Energiequelle (84) Druckluft ist.

11. Vorrichtung nach einem der Ansprüche 7 bis 10, dadurch gekennzeichnet, daß die Zuführmittel (41) auf einem beweglichen Wagen montiert sind, der über ein biegsames Rohr mit der Düse verbunden ist.

12. Vorrichtung nach einem der Ansprüche 7 bis 11, dadurch gekennzeichnet, daß sie einen Haltearm (38) für die Düse und Mittel (42) zur Befestigung des Haltearmes an einem Teil (23) des in Bearbeitung befindlichen Gerätes umfaßt.

13. Vorrichtung nach einem der Ansprüche 7 bis 12, dadurch gekennzeichnet, daß sie eine Schutz- und Flüssigkeitsauffanghaube (55) umfaßt.

14. Vorrichtung nach einem der Ansprüche 7 bis 13, dadurch gekennzeichnet, daß sie einen Arbeitszylinder (33) umfaßt, der dazu bestimmt ist, den Stopfbüchsenkörper (28) im Verlaufe des Ziehvorganges abzustützen.

## Claims

1. A process of extracting washers from a packing box, comprising the steps of opening the packing box, directing towards the uncovered surface of the washers, a jet of liquid having kinetic energy insufficient to damage the rest of the apparatus yet sufficient to pierce a hole trough at least one of the washers.

2. A process according to claim 1, characterized in that the jet is utilized in a fixed position, its energy being sufficient fo form a hole trough at least the uncovered washer, and to produce a pressure between the uncovered washer and the next washer or the bottom of the packing box sufficient to eject the uncovered washer.

3. A process according to either of claims 1 and 2, characterized in that the jet is directed approximately towards the middle of the width of the washers.

4. A process according to any of claims 1 to 3, characterized in that the liquid used is demineralized water.

5. A process according to any one of the preceeding claims, characterized in that the pressure of the liquid forming the jet is on the order of 800 bars.

6. A process according to any one of the preceding claims, characterized in that the jet is cylindrical, coherent, and of a diameter on the order of 0,5 mm.

7. Apparatus for extracting washers from a packing box, characterized in that it comprises means (90) for supplying liquid under pressure and a nozzle (39) for recieving the liquid under pressure and forming a jet of liquid directed against the uncovered surface of the washers (32), the kinetic energy of the jet being insufficient to damage the rest of the apparatus yet sufficient to pierce a hole through at least one of the washers.

8. Apparatus according to claim 7, characterized in that the means of supply (90) is capable of furnishing liquid under a pressure on the order of 800 bars.

9. Apparatus according to either of claims 7 or 8, characterized in that the nozzle is adapted to produce a jet of liquid which is homogeneous and of a diameter on the order of 0,5 mm.

10. Apparatus according to any of claims 7 to 9, characterized in that the supply means (90) comprises a compressor (65) for which the source of energy is compressed air.

11. Apparatus according to any of claims 7 to 10, characterized in that the supply means (41) is mounted on a mobile cart connected by a supply hose to the nozzle.

12. Apparatus according to any of claims 7 to 11, characterized in that it comprises a nozzle support arm (38) and support arm fixation means on a part (23) of the apparatus upon which one operates.

13. Apparatus according to any one of claims 7 to 12, characterized in that it comprises a hood (55) of protection for containing the liquid.

14. Apparatus according to any of claims 7 to 13, characterized in that it comprises a jack (33) destined for supporting the body of the packing box (28) during the extraction operation.

# FIG. 1

FIG. 2

0 052 567

FIG. 3

FIG. 4